# FASCICULE DE BREVET EUROPEEN

(11) **EP 1 719 700 B1**
(45) Date de publication et mention de la délivrance du brevet: **24.03.2010**
(21) Numéro de dépôt: 06009169.1
(22) Date de dépôt: 03.05.2006
(51) Int. Cl.: B64C 27/00, F16F 7/10

(54) **Dispositif de supportage d'une batterie d'un aéronef**
Haltesvorrichtung für eine Flugzeugbatterie
Support device for an aircraft battery

(30) Priorité: 06.05.2005 FR 0504606
(43) Date de publication de la demande: 08.11.2006
(73) Titulaire: EUROCOPTER, 13725 Marignane Cédex (FR)
(72) Inventeur: Manfredotti, Thomas, 06480 La Colle sur Loup (FR); Sequera, Damien, 30900 Nimes (FR)
(74) Mandataire: GPI & Associés

(56) Documents cités:
- FR-A- 2 775 042
- JP-A- 3 163 239
- US-A- 4 230 291
- US-A- 5 620 068

## Description

La présente invention est relative à un dispositif de supportage d'une batterie de giravion ou autre aéronef.

Le domaine technique de l'invention est celui de la fabrication d'hélicoptères.

Il est connu d'atténuer les vibrations d'un giravion par des dispositifs actifs ou passifs d'atténuation ; les dispositifs passifs sont des résonateurs accordés sur une fréquence déterminée, tandis que les dispositifs actifs comportent un actionneur commandé pour fournir des efforts s'opposant à des vibrations mesurées.

Il a été décrit dans les brevets FR 2 775 042 et US 6 286 782 un système d'atténuation passif qui utilise une batterie d'hélicoptère comme masse battante, et qui est accordé sur une fréquence voisine de 5Hz ; dans le dispositif décrit dans ces brevets, la batterie est fixée à quatre ressorts plans formant un tube recevant la batterie ; la batterie peut ainsi osciller selon une direction verticale et selon une direction latérale, avec une fréquence propre dépendant de la géométrie des ressorts plans et de la raideur de la matière les constituant.

Bien qu'il présente certains avantages, ce système ne permet pas d'ajuster la fréquence de résonance à une valeur souhaitée ; or les vibrations auxquelles sont soumises les différentes zones d'un giravion peuvent présenter des composantes fréquentielles variables de telles variations peuvent être dues à des variations des conditions de vol ; en outre deux giravions d'un même modèle peuvent présenter deux spectres vibratoires différents, en raison par exemple d'aménagements différents.

Le document JP 03 163 239 décrit toutes les caractéristiques techniques du préambule de la revendication 1.

Il est donc important de pouvoir proposer un système d'atténuation de vibrations qui puisse être indifféremment accordé sur une fréquence pouvant varier à l'intérieur d'une plage de fréquence prédéterminée.

C'est à ce besoin que répond l'invention.

Selon l'invention, il est proposé un dispositif selon la revendication 1 de suspension d'une batterie (de stockage d'énergie électrique) à bord d'un aéronef, en particulier d'un giravion.

Selon un mode préféré de réalisation, le dispositif de suspension comporte deux ressorts ainsi que deux moyens de réglage permettant respectivement de faire varier la raideur de l'un des deux ressorts.

De préférence encore, ces ressorts et leurs moyens de réglage associés permettent d'ajuster les deux fréquences de résonance de la suspension chargée par la batterie, qui correspondent respectivement aux deux modes propres de déformation de la suspension sous charge, en translation verticale d'une part, et en translation latérale d'autre part ; de préférence encore, cette translation latérale s'effectue selon l'axe de plus grande longueur de la batterie présentant une forme générale de parallélépipède rectangle.

La raideur des ressorts est de préférence choisie pour que lesdites fréquences de résonance de la suspension recevant la batterie soient supérieures à 10 Hertz, en particulier soient situées dans une plage de fréquence allant de 11 Hz à 50 Hz, de préférence encore de 20 Hz environ à 30 Hz environ.

Selon un mode préféré de réalisation de l'invention, le dispositif est prévu et agencé pour reposer sur un (ou plusieurs) support(s) solidaire(s) du corps de l'aéronef (ou giravion), et est en outre prévu et agencé pour que la batterie repose sur le dispositif qui est ainsi intercalé entre le support et la batterie, la hauteur du dispositif étant inférieure à celle de la batterie afin d'en limiter l'encombrement.

Selon une caractéristique préférentielle, les ressorts comporte une (ou plusieurs) lame(s) élastiquement déformable(s), et les moyens de réglage de raideur sont prévus et agencés pour modifier la longueur de la partie active (ou travaillante) du ressort considéré ; en particulier, ces moyens de réglage de raideur comportent un organe (tel qu'une butée) déplaçable entre au moins une première position conférant au ressort à lame(s) une première raideur et une seconde position conférant au ressort à lame(s) une seconde raideur distincte de la première raideur.

Selon un mode encore préféré de réalisation, l'organe est continûment déplaçable le long d'un support tel qu'une barre entre deux positions extrêmes de l'organe, de sorte que l'on peut faire varier la raideur du ressort sensiblement continûment dans une plage de valeurs de raideur déterminée ; ainsi, la fréquence de résonance correspondante du montage peut être parfaitement ajustée à une valeur prédéterminée.

De préférence, les lames s'étendent sensiblement parallèlement à l'axe de plus grande dimension du dispositif (et de la batterie).

Selon l'invention, le dispositif comporte :
a) - un premier barreau coudé prévu et agencé pour être monté pivotant par rapport à la structure de l'aéronef, par l'intermédiaire d'au moins deux articulations élastiques, selon un premier axe de pivotement sensiblement parallèle à l'axe de plus grande dimension du dispositif ;
b) - un premier ressort à lame(s) solidaire en deux zones espacées (en particulier en deux zones d'extrémité) du premier barreau, s'étendant sensiblement parallèlement au premier barreau ;
c) - un second barreau coudé prévu et agencé pour être monté pivotant par rapport à la structure de l'aéronef, par l'intermédiaire d'au moins deux articulations élastiques, selon un second axe de pivotement parallèle au premier axe de pivotement du barreau ;
d) - un (et de préférence deux) cavalier(s) monté(s) coulissant le long du second barreau, conçu(s) et agencé(s) pour pincer le premier ressort à lame(s) contre le second barreau et réduire ainsi sa longueur active et par conséquent augmenter sa raideur ;
e) - un support de batterie monté articulé sur chacun des deux barreaux coudés, de préférence par l'intermédiaire de deux couples d'articulations élastiques ;
f) - (au moins) un barreau articulé (pivotant) sous le support de batterie, et s'étendant sensiblement parallèlement audit axe de plus grande dimension ;
g) - (au moins) un deuxième ressort à lame(s) conçu et agencé pour être fixé à la structure de l'aéronef par l'intermédiaire d'un pivot et pour s'étendre le long du barreau pivotant ;
h) - un organe de fixation' (de préférence par friction ou serrage) apte à coulisser le long du barreau articulé et/ou le long du deuxième ressort à lame(s) articulé et à solidariser ce barreau à ce ressort, en modifiant la longueur de la partie active du ressort.

De préférence encore, le dispositif comporte deux ensembles définis ci avant sous f), g) et h) et disposés symétriquement de part et d'autre des barreaux coudés.

De préférence également, au moins un ressort à lame(s), en particulier ledit premier ressort à lame(s), se déforme en torsion sous l'effet du poids de la batterie, tandis qu'au moins un ressort à latue(s), en particulier ledit deuxième ressort à lame(s), se déforme en flexion sous l'effet du poids de la batterie.

D'autres caractéristiques et avantages de l'invention apparaissent dans la description suivante, qui se réfère aux dessins "annexés et qui illustre, sans aucun caractère limitatif, des modes préférés de réalisation de l'invention.
La figure 1 est une vue schématique en perspective d'une batterie de forme parallélépipédique.
La figure 2 est une vue schématique en perspective d'un dispositif selon l'invention interposé entre une plaque solidaire de la structure de l'aéronef, et un plateau ou bac conçu pour recevoir une batterie.
La figure 3 est une vue éclatée en perspective du dispositif de la figure 2.
La figure 4 est une vue schématique en perspective du dispositif de suspension des figures 2 et 3, destiné à supporter le plateau recevant la batterie.
La figure 5 est une vue similaire à la figure 4 où ne sont pas représentés les éléments du dispositif de suspension qui permettent de régler la fréquence de résonance correspondant au mode de déplacement transversal de la batterie ; ces éléments faisant l'objet des figures 10 et 11.
La figure 6 est une vue schématique en perspective d'un mode préféré de réalisation d'une articulation élastique rentrant dans la constitution d'un dispositif selon l'invention.
La figure 7 est un schéma illustrant la sollicitation en torsion du ressort à lame du dispositif de la figure 5 lors d'un mouvement de translation verticale de la batterie reposant sur le dispositif.
La figure 8 est un schéma illustrant la sollicitation en flexion du ressort à lame du dispositif de la figure 5 lors d'un mouvement de rotation selon l'axe Y de plus grande dimension de la batterie.
La figure 9 est un schéma illustrant la sollicitation en flexion du ressort à lame du dispositif de la figure 5 lors d'un mouvement de rotation selon l'axe transversal X de plus petite dimension de la batterie.
La figure 10 est une vue schématique en perspective de la partie de la suspension permettant de régler la résonance de la suspension selon une translation TY.
La figure 11 est une vue de coté d'une partie du système illustré figure 10 qui illustre le réglage de la longueur active d'une lame de ressort sollicitée en flexion et reliée à un barreau pivotant.

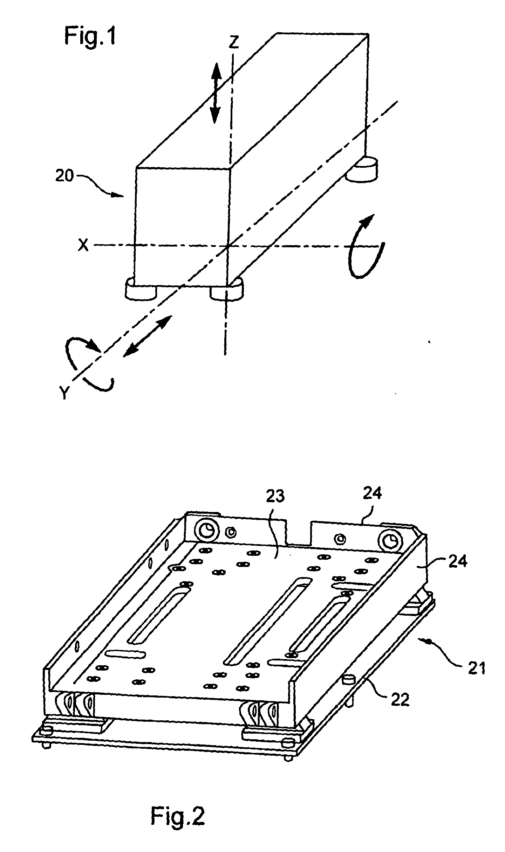

Par référence à la figure 1, la batterie 20 présente une forme parallélépipédique et est orientée selon deux axes X et Y transversaux de l'aéronef, et selon un axe vertical Z.

On sait que lorsque qu'un corps considéré indéformable - hypothèse qui peut être prise pour une batterie - est suspendu par rapport à un support - en l'espèce un aéronef - par l'intermédiaire d'une "suspension" (c'est-à-dire un dispositif de suspension), ce corps suspendu est susceptible de se déplacer par rapport au support selon des modes de déplacement "préférentiels" ou "propres" ou "naturels" ; parmi ces modes, les modes de déplacement en translation selon chacun des axes X, Y et Z, ainsi que les modes de déplacement en rotation selon ces axes (tangage, roulis et lacet) s'effectuent à une fréquence (de résonance) respective qui dépend en particulier de la configuration et de la raideur des éléments formant la suspension : ces fréquences sont normalement basses ; des phénomènes de couplage entre deux modes préférentiels peuvent apparaître, en particulier lorsque les fréquences correspondant à ces deux modes sont proches l'une de l'autre.

On comprend donc qu'il est fondamental de maîtriser parfaitement ces phénomènes pour pouvoir utiliser efficacement une batterie suspendue comme atténuateur passif de vibrations à bord d'un aéronef ; il faut en particulier éviter de "caler" le résonateur formé par la batterie suspendue sur deux fréquences très voisines, sous peine de voir un mode propre selon un axe se comporter comme un atténuateur pour un mode selon un autre axe, du fait d'un couplage entre ces modes.

En particulier l'invention a pour objectif d'éviter un couplage entre un mode de translation selon l'axe Z et un mode de translation selon l'axe Y.

Par référence à la figure 2, le dispositif 21 selon l'invention est interposé entre un support 22 faisant partie de la structure de l'aéronef et un plateau 23 sur lequel vient reposer la batterie, ce plateau présentant une forme de bac adaptée à la base de la batterie (non représentée) avec des rebords 24.

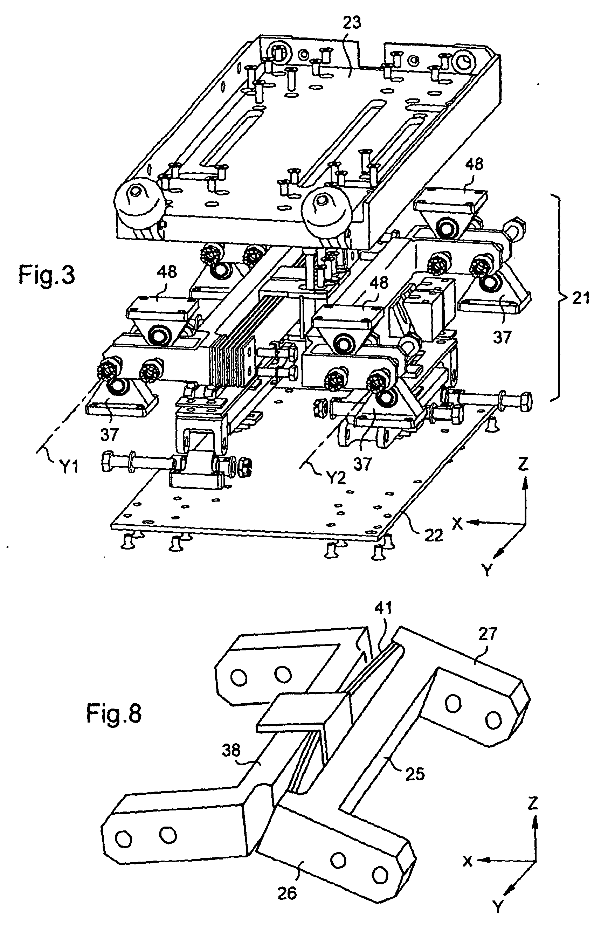

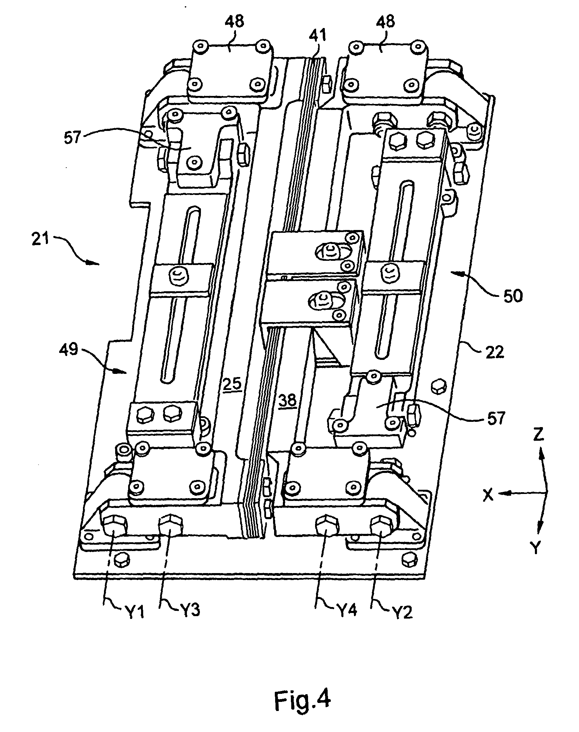

Par référence aux figures 3 à 5 en particulier, le dispositif 21 comporte :
a) - un premier barreau 25 coudé prévu et agencé pour être monté pivotant par rapport à la structure du giravion, par l'intermédiaire d'au moins deux articulations 31 élastiques, selon un premier axe (Y1) de pivotement sensiblement parallèle à l'axe (Y) de plus grande dimension du dispositif;
b) - un premier ressort à lame(s) 41 solidaire en deux zones d'extrémité du premier barreau, s'étendant sensiblement parallèlement au premier barreau ;
c) - un second barreau 38 coudé prévu et agencé pour être monté pivotant par rapport à la structure du giravion, par l'intermédiaire d'au moins deux articulations élastiques; selon un second axe (Y2) de pivotement parallèle au premier axe de pivotement du barreau ;
d) - un (et de préférence deux) cavalier(s) (46,47) monté(s) coulissant le long du second barreau, conçu(s) et agencé(s) pour pincer le premier ressort à lame(s) contre le second barreau et réduire ainsi sa longueur active et par conséquent augmenter sa raideur ;
e) - un support 23 de batterie monté articulé sur chacun des deux barreaux coudés, de préférence par l'intermédiaire de deux couples d'articulations élastiques ;
f) - (au moins) un barreau 59 articulé (pivotant) sous le support de batterie et s'étendant sensiblement parallèlement audit axe (Y) de plus grande dimension ;
g) - (au moins) un deuxième ressort à lame(s) 54 conçu et agencé pour être fixé à la structure du giravion par l'intermédiaire d'un pivot et pour s'étendre le long du barreau 59 pivotant ;
h) - un organe 61, 62 de fixation (de préférence par friction ou serrage) apte à coulisser le long du barreau articulé et/ou le long du deuxième ressort à lame(s) articulé et à solidariser ce barreau à ce ressort, en limitant la partie active du ressort.

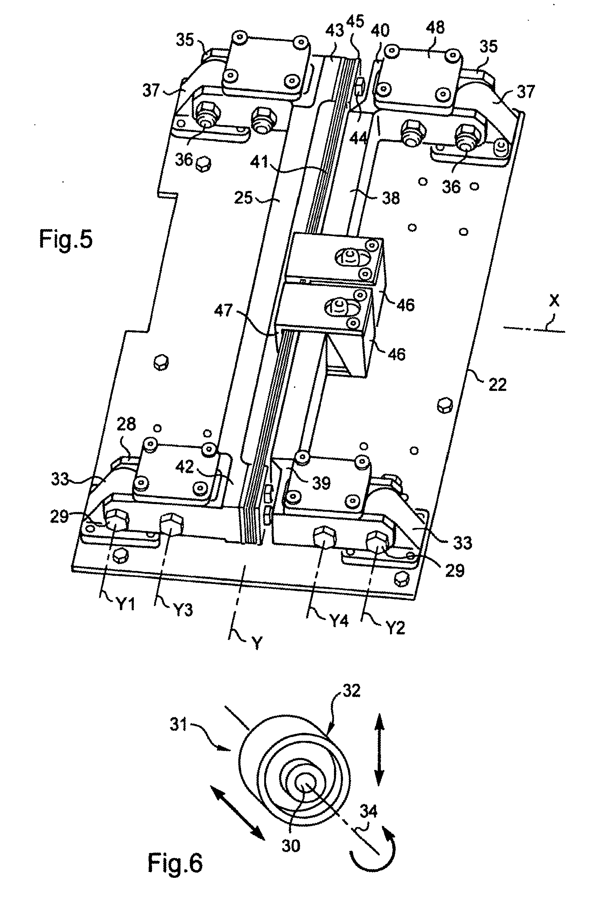

Le fonctionnement de la suspension selon l'axe vertical Z et son mode de déformation correspondant à des mouvements de translation verticale de la batterie suspendue, s'opèrent comme indiqué ci-après en relation avec les figures 5 à 9 particulièrement.

Le premier barreau coudé ou arceau 25 est monté pivotant selon l'axe Y1 par rapport au support 22, par une articulation équipant chacune de ses deux extrémités 26, 27 coudées : à cet effet, l'extrémité 26 comporte une chape 28 traversée par une vis 29 s'étendant selon l'axe Y1, autour de laquelle la chape peut pivoter selon cet axe.

La vis 29 s'étend au travers de l'alésage central 30 d'une articulation ou "silentbloc" 31 illustrée figure 6 ; cette articulation de forme extérieure 32 cylindrique est logée dans un carter 33 rigidement solidaire du support 22 ; cette articulation présente une raideur radiale élevée, tandis que ses raideurs axiale et en torsion (selon son axe 34 de symétrie) sont faibles.

De la même façon, la seconde extrémité coudée 27 du barreau 25 comporte une chape 35 pivotant autour d'une vis 36 s'étendant selon l'axe Y1 dans l'alésage d'une seconde butée ou articulation élastique 31 identique à la première, cette butée ou articulation étant logée dans un palier 37 fixé au support 22.

Un montage identique permet l'articulation selon l'axe Y2 du second barreau coudé 38, par ses deux extrémités 39 et 40, par rapport au support 22.

Des lames élastiques 41 sensiblement planes s'étendent entre les parties centrales des barreaux 25 et 38, le long de ceux-ci, dans un plan vertical médian contenant l'axe Y ou parallèle à cet axe.

Les axes Y, Y1, Y2, Y3 et Y4 sont parallèles entre eux.

L'empilement de ces lames est respectivement fixé aux deux extrémités longitudinales 42 et 43 de la partie centrale du barreau 25 par des vis 44 qui pincent cet empilement par l'intermédiaire d'une rondelle 45 respective.

Deux cavaliers identiques 46 sont montés coulissant selon l'axe Y sur la partie centrale du second barreau 38.

Chacun de ces cavaliers chevauche une partie centrale ou intermédiaire de l'empilement de lames 41, et s'appuie sur une face de cet empilement disposée en regard du premier barreau 25, par l'intermédiaire d'un mors 47 ; la distance (mesurée selon l'axe X transversal) séparant le mors 47 de chaque cavalier du barreau 38 peut être ajustée de manière à ce que le mors pince la zone des lames 41 chevauchée par le cavalier contre le barreau 38, de façon à former une liaison par friction entre cette zone des lames et le barreau 38.

En déplaçant le cavalier le long du barreau 38 et en pinçant les lames par le mors de ce cavalier, on peut ainsi modifier la longueur "active" des lames 41, à savoir la longueur de la portion de ces lames s'étendant entre le mots du cavalier et l'extrémité 42 ou 43 du barreau 25 correspondante ; on peut ainsi régler la raideur en Z de cet empilement de lames ressort.

Le plateau 23 support batterie est respectivement solidaire à chacune des quatre extrémités des deux barreaux 25, 38, par l'intermédiaire de quatre pièces 48 similaires ou identiques aux pièces 37, et par l'intermédiaire de quatre butées élastiques (telles que 31 figure 6) et de quatre vis 49, comme illustré figure 5.

Ce montage similaire au montage des barreaux 25, 38 sur le support 22, permet le pivotement des deux pièces 48 situées à gauche figure 5, selon l'axe Y₃, par rapport au barreau 25, et permet le pivotement des deux pièces 48 situées à droite figure 5, selon l'axe Y₄, par rapport au barreau 38.

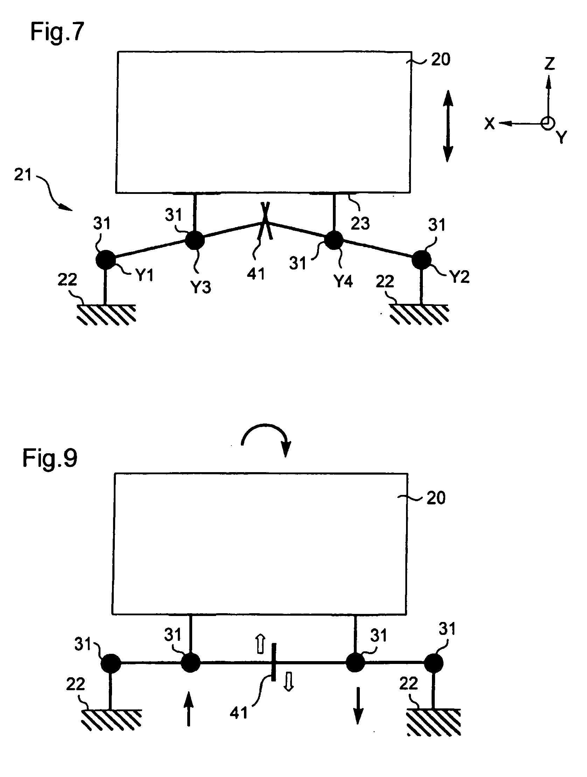

Grâce à cette suspension 21, lors d'un mouvement de translation verticale de la batterie 20 et de son plateau 23, les deux arceaux 25, 38 pivotent (selon les axes Y₁ et Y₂) de façon symétrique par rapport au plan vertical médian (YZ) ; les lames 41 sont sollicitées en torsion, et leur capacité de déformation confère une faible raideur à la suspension pour ce mode de déformation illustré schématiquement figures 7 et 8.

Lors d'un mouvement de basculement autour de Y, les arceaux 25, 38 pivotent de façon opposée, l'un ayant un mouvement vers le bas et l'autre vers le haut ; dans ce cas les lames 41 sont sollicitées en flexion, suivant leur plus grande inertie ; leur raideur suivant cette direction étant élevée, la raideur en torsion autour de Y est par conséquent importante, ce qui donne à ce mode de résonance une fréquence élevée, et limite les mouvements de la batterie.

Par référence à la figure 9, pour une rotation autour de l'axe X, la cinématique du mécanisme ne sollicite pas les lames torsibles 41 ; les efforts transitent directement des "silentblocs" de fixation du réceptacle 23 de la batterie aux "silentblocs" de fixation des bras coudés à la structure 22.

Dans ce mode de déformation de la suspension, les arceaux sont sollicités en torsion autour de l'axe Y, leur grande inertie en torsion les empêche de se déformer (limite très fortement leur déformation).

Le mouvement en Z est donc un mouvement purement vertical et les moments de basculement sont réduits par la cinématique de cette suspension.

Par référence aux figures 3, 4, 10 et 11, la suspension comporte en outre deux ensembles identiques 49 et 50, qui s'étendent tête-bêche, et sont disposés de part et d'autre des portions centrales des arceaux 25 et 28.

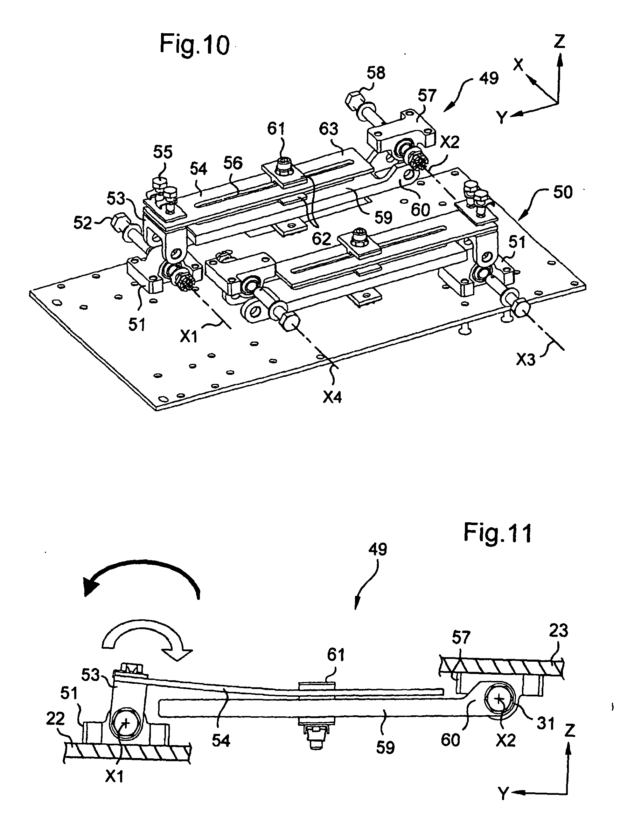

Chacun de ces ensembles, tel que l'ensemble 49 illustré figure 10 et 11, comporte :
- une pièce 51 de fixation au support 22, cette pièce recevant une articulation élastique (cachée sur ces figures) telle que celle de la figure 6 ;
- une vis 52 s'étendant selon l'axe X1 dans l'alésage de cette articulation élastique, et recevant à pivotement selon cet axe, les deux flasques percés d'une chape 53 ;
- une lame 54 dont une extrémité est fixée à encastrement à la chape 53 par deux vis 55 ; cette lame s'étend le long d'un axe parallèle à l'axe Y, et présente une fente 56 longitudinale ;
- une pièce 57 de fixation à la face inférieure du bac 23, cette pièce recevant une articulation élastique traversée par une vis 58 d'axe X2 ;
- un barreau 59 présentant une chape 60 d'extrémité par laquelle ce barreau est articulé selon l'axe X2 par rapport à la pièce 57 et au support 23 de batterie ; ce barreau est muni d'une fente longitudinale s'étendant sensiblement en regard de la fente 56 de la lame 54 ;
- un boulon 61 équipé de rondelles 62 et s'étendant au travers des fentes (56) de la lame 54 et du barreau 59 ; ce boulon est prévu pour solidariser par friction une zone de la lame 54 avec une zone du barreau 59 ; les parties en regard mutuel des pièces 54 et 59 s'étendant sur une grande partie de leur longueur respective, le déplacement du boulon 61 le long des fentes permet de solidariser le barreau et la lame 54 soit au voisinage de l'extrémité libre 63 de la lame pour diminuer la raideur de ce montage en flexion, soit au contraire au voisinage de son encastrement avec la chape 53, pour augmenter cette raideur.

Le déplacement en Y du réceptacle batterie est possible grâce à la souplesse axiale des "silentblocs".

Le mouvement se fait entre le réceptacle et les arceaux et entre les arceaux et la structure. Cette disposition n'introduit aucun effet de couplage entre les deux axes.

La raideur propre des « silentblocs » contribue à l'accord en fréquence en Y.

Le complément de raideur est amené par deux dispositifs latéraux 49, 50 qui utilisent la flexion de la lame 54 dont la longueur flexible peut varier grâce à un cavalier (boulon 61).

L'application d'un déplacement parallèle à la lame, mais décalé par rapport à son plan, la sollicite en moment et réinjecte dans le réceptacle batterie un effort proportionnel.

## Revendications

1. Dispositif (21) de suspension d'une batterie (20) d'un aéronef, qui comporte deux ressorts (41,54), ainsi que deux moyens de réglage permettant respectivement de faire varier la raideur des deux ressorts, ces ressorts et leurs moyens de réglage associés permettant d'ajuster deux fréquences de résonance de la suspension chargée par la batterie qui correspondent respectivement à deux modes propres de déformation de la suspension sous charge, afin d'éviter de caler le résonateur formé par la batterie suspendue sur deux fréquences voisines,
**caractérisé en ce qu'**il comporte:
a) - un premier barreau (25) coudé prévu et agencé pour être monté pivotant par rapport à la structure de l'aéronef, par l'intermédiaire d'au moins deux articulations (31) élastiques, selon un premier axe (Y1) de pivotement sensiblement parallèle à l'axe (Y) de plus grande dimension du dispositif ;
b) - un premier ressort à lame(s) (41) solidaire en deux zones espacées (42,43) (en particulier en deux zones d'extrémité) du premier barreau, s'étendant sensiblement parallèlement au premier barreau ;
c) - un second barreau (38) coudé prévu et agencé pour être monté pivotant par rapport à la structure de l'aéronef, par l'intermédiaire d'au moins deux articulations élastiques, selon un second axe (Y2) de pivotement parallèle au premier axe de pivotement du barreau ;
d) - un (et de préférence deux) cavalier(s) (46,47) monté(s) coulissant le long du second barreau, conçu(s) et agencé(s) pour pincer le premier ressort à lame(s) contre le second barreau et réduire ainsi sa longueur active et par conséquent augmenter sa raideur ;
e) - un support (23) de batterie monté articulé sur chacun des deux barreaux coudés, de préférence par l'intermédiaire de deux couples d'articulations élastiques ;
f) - (au moins) un barreau (59) articulé (pivotant) sous le support de batterie et s'étendant sensiblement parallèlement audit axe (Y) de plus grande dimension ;
g) - (au moins) un deuxième ressort à lame(s) (54) conçu et agencé pour être fixé à la structure de l'aéronef par l'intermédiaire d'un pivot (X1) et pour s'étendre le long du barreau (59) pivotant ;
h) - un organe (61,62) de fixation (de préférence par friction ou serrage) apte à coulisser le long du barreau articulé et/ou le long du deuxième ressort à lame(s) et à solidariser ce barreau à ce ressort, en modifiant la longueur de la partie active du ressort.

2. Dispositif selon la revendication 1 dans lequel les ressorts et leurs moyens de réglage associés permettent d'ajuster les deux fréquences de résonance de la suspension chargée par la batterie qui correspondent respectivement aux deux modes propres de déformation de la suspension sous charge, en translation verticale (Z) d'une part, et en translation latérale (Y) d'autre part.

3. Dispositif selon la revendication 1 ou 2, dans lequel la raideur des ressorts est choisie pour que lesdites fréquences de résonance de la suspension recevant la batterie soient supérieures à 10 Hertz.

4. Dispositif selon l'une quelconque des revendications 1 à 3, dans lequel la raideur des ressorts est choisie pour que lesdites fréquences de résonance de la suspension recevant la batterie soient situées dans une plage de fréquence allant de 11 Hz à 50 Hz, de préférence de 20 Hz environ à 30 Hz environ.

5. Dispositif selon l'une quelconque des revendications 1 à 4, qui est prévu et agencé pour être intercalé entre au moins un support (22) solidaire de l'aéronef et la batterie qui repose sur le dispositif, la hauteur du dispositif étant inférieure à celle de la batterie.

6. Dispositif selon l'une quelconque des revendications 1 à 5, dans lequel les ressorts comportent une (ou plusieurs) lame(s) élastiquement déformable(s), et les moyens de réglage sont prévus et agencés pour modifier la longueur de la partie active du ressort et/ou de la lame considéré(e).

7. Dispositif selon l'une quelconque des revendications 1 à 6, dans lequel les moyens de réglage comportent un organe (46,61) de réglage déplaçable entre au moins une position conférant au ressort une première raideur et une seconde position conférant au ressort une seconde raideur distincte de la première raideur.

8. Dispositif selon la revendication 7, dans lequel l'organe de réglage est continûment déplaçable le long d'un support (38,59) tel qu'une barre entre deux positions extrêmes de l'organe, de sorte que l'on peut faire varier la raideur du ressort sensiblement continûment dans une plage de valeur de raideur déterminée.

9. Dispositif selon l'une quelconque des revendications 6 à 8, dans lequel les lames s'étendent sensiblement parallèlement à l'axe (Y) de plus grande dimension du dispositif (et de la batterie).

10. Dispositif selon l'une quelconque des revendications 6 à 9, dans lequel au moins un ressort à lame(s) se déforme en flexion sous l'effet du poids de la batterie.

11. Dispositif selon l'une quelconque des revendications 6 à 10, dans lequel au moins un ressort à lame(s) se déforme en torsion sous l'effet du poids de la batterie.

## Claims

1. Device (21) for suspending an aircraft battery (20), which comprises two springs (41,54), and two adjustment means enabling the respective stiffness of the two springs to be varied, these springs and their associated adjustment means enabling the adjustment of two resonant frequencies of the suspension loaded by the battery which correspond respectively to two natural modes of deformation of the suspension under load, in order to avoid the locking of the resonator formed by the suspended battery on two adjacent frequencies,
**characterised in that** it comprises:
a) - a first bent bar (25) provided and arranged to be mounted to pivot relative to the structure of the aircraft, via at least two resilient hinges (31), about a first pivot axis (Y1) substantially parallel to the longest axis (Y) of the device;
b) - a first leaf spring (41) secured at two spaced-apart zones (42,43) (in particular at two end zones) of the first bar, and extending substantially parallel to the first bar;
c) - a second bent bar (38) provided and arranged to be mounted to pivot relative to the structure of the aircraft, via at least two resilient hinges, about a second pivot axis (Y2) parallel to the first pivot axis of the bar;
d) - one (and preferably two) rider(s) (46,47) mounted to slide along the second bar, and designed and arranged to clamp the first leaf spring against the second bar, thereby reducing its active length and consequently increasing its stiffness;
e) - a battery support (23) hinged on each of the two bent bars, preferably via two pairs of resilient hinges;
f) - (at least) one bar (59) (pivotally) hinged under the battery support and extending substantially parallel to said longest axis (Y);
g) - (at least) one second leaf spring (54) designed and arranged to be fastened to the structure of the aircraft via a pivot (X1) and to extend along the pivot bar (59);
h) - a fastener member (61,62) (preferably acting by friction or by clamping) suitable for sliding along the hinged bar and/or along the second leaf spring, and for securing said bar to said spring, while modifying the length of the active portion of the spring.

2. Device according to Claim 1, in which the springs and their associated adjustment means enable the adjustment of the two resonant frequencies of the suspension loaded by the battery which correspond respectively to the two natural modes of deformation of the suspension under load, on the one hand in vertical translation (Z), and on the other hand in lateral translation (Y).

3. Device according to Claim 1 or 2, in which the stiffness of the springs is chosen so that said resonant frequencies of the suspension receiving the battery are greater than 10 Hertz.

4. Device according to any one of Claims 1 to 3, in which the stiffness of the springs is chosen so that said resonant frequencies of the suspension receiving the battery are situated in a frequency range of 11 Hz to 50 Hz, preferably of about 20 Hz to about 30 Hz.

5. Device according to any one of Claims 1 to 4, which is provided and arranged to be interposed between at least one support (22) secured to the aircraft and the battery which rests on the device, the height of the device being less than that of the battery.

6. Device according to any one of Claims 1 to 5, in which the springs comprise one (or more) elastically deformable leaf(leaves), and the adjustment means are provided and arranged to modify the length of the active portion of the spring and/or the leaf in question.

7. Device according to any one of Claims 1 to 6, in which the adjustment means comprise an adjustment member (46,61) movable between at least a position giving the spring a first stiffness, and a second position giving the spring a second stiffness different from the first stiffness.

8. Device according to Claim 7, in which the adjustment member is continuously displaceable along a support (38,59) such as a bar between two extreme positions of the member, thereby enabling the stiffness of the spring to be varied substantially continuously over a determined range of stiffness values.

9. Device according to any one of Claims 6 to 8, in which the leaves extend substantially parallel to the longest axis (Y) of the device (and of the battery).

10. Device according to any one of Claims 6 to 9, in which at least one leaf spring is flexurally deformed under the effect of the weight of the battery.

11. Device according to any one of Claims 6 to 10, in which at least one leaf spring is torsionally deformed under the effect of the weight of the battery.

## Patentansprüche

1. Aufhängung (21) einer Batterie (20) eines Luftfahrzeugs mit zwei Federn (41, 54), sowie zwei Einstellmitteln, die es jeweils ermöglichen die Steifigkeit der beiden Federn zu verändern, wobei die Federn und ihre zugehörigen Einstellmittel es ermöglichen zwei Resonanzfrequenzen der mit der Batterie beladenen Aufhängung einzustellen, die jeweils zwei Eigenmoden der Verformung der beaufschlagten Aufhängung entsprechen, um zu verhindern, dass sich der durch die aufgehängte Batterie gebildete Resonator auf zwei benachbarten Frequenzen einstellt, **gekennzeichnet durch**:
a) eine erste abgewinkelte Stange (25), die vorgesehen und angeordnet ist, um bezüglich des Aufbaus des Luftfahrzeugs mittels mindestens zweier elastischer Scharniere (31) um eine erste Schwenkachse (Y1) schwenkbar montiert zu sein, die im Wesentlichen parallel zur Achse (Y) der größten Abmessung der Aufhängung ist;
b) eine erste Blattfeder (41), die an zwei beabstandeten Bereichen (42, 43) (insbesondere zwei Endbereichen) mit der ersten Stange fest verbunden sind, und die sich im Wesentlichen parallel zu der ersten Stange erstreckt;
c) eine zweite abgewinkelte Stange (38), die vorgesehen und angeordnet ist, um bezüglich des Aufbaus des Luftfahrzeugs verschwenkbar montiert zu sein, mittels mindestens zweier elastischer Scharniere, um eine zweite Schwenkachse (Y2), die parallel zur ersten Schwenkachse der Stange ist;
d) einen (und vorzugsweise zwei) Reiter (46, 47), der bzw. die entlang der zweiten Stange gleitbar montiert ist bzw. sind und vorgesehen und angeordnet ist bzw. sind, um die erste Blattfeder gegen die zweite Stange zu pressen und somit ihre aktive Länge zu reduzieren, um somit ihre Steifigkeit zu erhöhen;
e) einen Batterieträger (23), der auf jeder der beiden angewinkelten Stangen angelenkt ist, vorzugsweise über zwei elastische Gelenkpaare;
f) (mindestens) eine (drehbar) angelenkte Stange (59) unter dem Batterieträger, die sich im Wesentlichen parallel zur Achse (Y) der größten Abmessung der Aufhängung erstreckt;
g) (mindesten) eine zweite Blattfeder (54), die vorgesehen und angeordnet ist, um an dem Aufbau des Luftfahrzeugs über eine Drehachse (X1) befestigt zu sein, die sich entlang der schwenkbaren Stange (59) erstreckt;
h) ein Befestigungsmittel (61, 62) (vorzugsweise über Reibung oder Klemmung), welches entlang der angelenkten Stange und/oder entlang der zweiten Blattfeder gleiten kann und welches diese Stange mit der Feder fest verbinden kann, wobei die Länge des aktiven Teils der Feder verändert wird.

2. Aufhängung nach Anspruch 1, bei der die Federn und ihre zugehörigen Einstellmittel es ermöglichen die beiden Resonanzfrequenzen der mit einer Batterie beladenen Aufhängung einzustellen, die jeweils den beiden Eigenmoden der Verformung der beaufschlagten Aufhängung entsprechen, einerseits in einer translatorischen vertikalen Richtung (Z) und andererseits in einer translatorischen Seitenreichtung (Y).

3. Aufhängung nach Anspruch 1 oder 2, bei der die Steifigkeit der Federn so ausgesucht ist, dass die Resonanzfrequenzen der die Batterie aufnehmenden Aufhängung höher als 10 Hz sind.

4. Aufhängung nach einem der Ansprüche 1 bis 3, bei der die Steifigkeit der Federn so gewählt ist, dass die Resonanzfrequenzen der die Batterie aufnehmenden Aufhängung in einem Frequenzbereich zwischen 11 und 50 Hz liegen, vorzugsweise zwischen ungefähr 20 Hz bis ungefähr 30 Hz.

5. Aufhängung nach einem der Ansprüche 1 bis 4, die vorgesehen und angeordnet ist, um zwischen mindestens einem mit dem Luftfahrzeug fest verbundenen Träger (22) und der Batterie angeordnet zu werden, die auf der Aufhängung lagert, wobei die Höhe der Aufhängung kleiner ist als die der Batterie.

6. Aufhängung nach einem der Ansprüche 1 bis 5, bei der die Federn ein (oder mehrere) elastisch deformierbares Blatt, bzw. Blätter aufweisen und die Einstellmittel vorgesehen und angeordnet sind, um die Länge des aktiven Bereichs der Federn und/oder des entsprechenden Blattes bzw. der entsprechenden Blätter zu verändern.

7. Aufhängung nach einem der Ansprüche 1 bis 6, bei der die Einstellmittel ein Einstellorgan (46, 61) aufweisen, welches zwischen mindestens einer Position, die der Feder eine erste Härte verleiht und einer zweiten Position, die der Feder eine zweite Härte, die von der ersten Härte verschieden ist, verleiht, aufweist.

8. Aufhängung nach Anspruch 7, bei der das Einstellmittel kontinuierlich verschiebbar entlang eines Trägers (38, 59), wie beispielsweise einer Stange zwischen zwei Endstellungen des Einstellmittels verschiebbar ist, derart, dass die Steifigkeit der Feder im Wesentlichen kontinuierlich in einem vorbestimmten Steifigkeitsbereich veränderbar ist.

9. Aufhängung nach einem der Ansprüche 6 bis 8, bei der die Blätter sich im Wesentlichen parallel zur Achse (Y) der größten Abmessung der Aufhängung (und der Batterie) erstrecken.

10. Aufhängung nach einem der Ansprüche 6 bis 9, bei der mindestens eine Blattfeder sich unter der Wirkung des Gewichts der Batterie verbiegt.

11. Aufhängung nach einem der Ansprüche 6 bis 10, bei der mindestens eine Blattfeder sich unter der Wirkung des Gewichtes der Batterie verdreht.
